# EUROPEAN PATENT APPLICATION

(11) **EP 4 470 721 A1**
(43) Date of publication of application: **04.12.2024**
(21) Application number: 24179441.1
(22) Date of filing: 31.05.2024
(51) Int. Cl.: B25B 23/10, B05C 5/00, B23P 19/06, F16B 33/00

(54) **GRIPPING AND SEALANT-DISPENSING DEVICES FOR FASTENER INSTALLATION**

(30) Priority: 01.06.2023 US 202318327365
(71) Applicant: The Boeing Company, Arlington, VA 22202 (US)
(72) Inventor: DOBBERFUHL, James P., Arlington, 22202 (US); JONES, Nathan H., Arlington, 22202 (US); FRASER, Jason A., Arlington, 22202 (US); FULLER, Mark D., Arlington, 22202 (US); DESAI, Raajan N., Arlington, 22202 (US); TIEN, Allan, Arlington, 22202 (US)
(74) Representative: Morrall, Jonathan Ian McLachlan

(57) **Abstract**

A gripper for a fastener installation assembly includes a body having a passage extending from a first end of the body to a second end of the body. The gripper includes an inlet of the passage disposed at the second end of the body and an outlet of the passage disposed at the first end of the body. The first end of the body includes a lip configured to engage a fastener and the lip includes the outlet of the passage. The inlet is configured to couple to a sealant source to receive sealant into the passage. The gripper is configured such that sealant received at the inlet passes through the passage and is dispensed through the outlet onto the fastener engaged by the lip of the body.

## Description

### FIELD

This disclosure relates to systems and methods for gripping mechanisms for fastener installation, including gripping mechanisms configured to dispense sealant.

### INTRODUCTION

Fasteners are used in various manufacturing industries, including in the manufacture of aerospace vehicles, land vehicles, machinery, and more. In some applications, a hole in which a fastener is to be installed is sealed (e.g., against ingress of moisture, debris, and/or other contaminants or corrosion) by applying a sealant to the fastener and/or to a countersink of the hole. This may be referred to as a "wet installation" of the fastener. However, when sealant is applied to a fastener, the application is usually limited to the unthreaded portion of the fastener shank (sometimes called the "grip length"). It can be undesirable to apply sealant to a threaded portion of the fastener, because sealant on the threaded portion can affect the torque that should be applied to install the fastener. This may be particularly problematic if the fastener is to be installed by an automated system programmed to install the fastener by applying a predetermined torque (i.e., a torque previously selected under the assumption that the threaded portion would be free of sealant).

However, some known systems for installing fasteners and sealant are designed to install particular fasteners and may not readily accommodate fasteners having shorter grip lengths than those particular fasteners. For example, the fastening machines formerly manufactured by Gemcor Automation LLC, typically referred to as Gemcor machines, are used to fasten wing skin panels to wing stringers to manufacture aircraft wings. A Gemcor machine holds a fastener to be installed by gripping an unthreaded portion of the fastener between two gripper fingers. If the unthreaded portion of the fastener is long enough, the gripper fingers can hold a first length of the unthreaded portion while a second length of the unthreaded portion remains exposed. Sealant can be applied directly to this exposed second length of the unthreaded portion of the fastener (e.g., by one or more sealant injector nozzles that the system automatically moves into position adjacent the exposed second length of the unthreaded portion). However, if the unthreaded portion of the fastener is too short, then the gripper fingers occupy an entire length, or nearly an entire length, of the unthreaded portion. Too little length of the unthreaded portion remains exposed to allow for sealant application (e.g., because no unthreaded length remains exposed at all, or because the exposed portion is so small that not enough sealant can be deposited on it or there is not enough room to maneuver the injector nozzles to deposit the sealant). Thus for fasteners with shorter grip lengths, it can be undesirable to apply sealant using the normal sealant injector nozzle process, because the nozzles would be disposed relative to the fastener to apply sealant to the threaded portion of the fastener. Accordingly, a more cumbersome workaround is typically used to apply sealant in a desirable manner. For example, human operators may manually use sealant guns to apply sealant to the hole in which the fastener is to be installed. The manual process lacks certain advantages of the automated process, such as speed, reliability, and safety.

Solutions are therefore needed for automatically applying sealant for installation of fasteners having a greater range of grip lengths fasteners having relatively short unthreaded portions.

### SUMMARY

The present disclosure provides systems, apparatuses, and methods relating to a gripper for a fastener installation assembly.

In some embodiments, a gripper for a fastener installation assembly comprises a body, the body comprising a first end and a second end opposite the first end, and the body having a passage extending between the first end and the second end; a lip extending from the first end of the body, the lip having at least one orifice in fluid communication with the passage; wherein the lip has a recess configured to engage an unthreaded portion of a fastener; and wherein the body is configured to deliver sealant to the orifice via the passage for application to the unthreaded portion of the fastener engaged by the lip.

In some embodiments, a sealant applicator comprises a body comprising a first end and a second end opposite the first end, wherein the body has an outlet at the first end and an inlet at the second end, the inlet and outlet being in fluid communication with each other; and a pair of arms protruding from the first end of the body, wherein the pair of arms are configured to receive between them an unthreaded portion of a fastener; wherein the inlet faces in a first direction and the outlet faces in a second direction away from the first direction.

In some embodiments, a method of applying sealant comprises receiving a sealant at an inlet of a first gripper; receiving an unthreaded portion of a fastener shank at a notched end of the first gripper; and dispensing a sealant on the unthreaded portion of the fastener shank from an outlet formed in the notched end of the first gripper, the outlet being in fluid communication with the inlet.

Features, functions, and advantages may be achieved independently in various embodiments of the present disclosure, or may be combined in yet other embodiments, further details of which can be seen with reference to the following description and drawings.

### BRIEF DESCRIPTION OF THE DRAWINGS

Fig. 1 is a schematic front view of an illustrative fastener gripper in accordance with aspects of the present teachings.
Fig. 2 is a schematic top view of the illustrative fastener gripper of Fig. 1.
Fig. 3 is a perspective view of an illustrative fastener installation assembly in accordance with aspects of the present teachings.
Fig. 4 is a side view of a pair of another illustrative fastener gripper in accordance with aspects of the present teachings.
Fig. 5 is a sectional side view of one of the illustrative fastener grippers of Fig. 4.
Fig. 6 is a front isometric view of one of the illustrative fastener grippers of Fig. 4.
Fig. 7 is a rear isometric view of one of the illustrative fastener grippers of Fig. 4.
Fig. 8 is a sectional side view of yet another illustrative fastener gripper in accordance with aspects of the present teachings.
Fig. 9 is a front isometric view of the illustrative fastener gripper of Fig. 8.
Fig. 10 is a rear isometric view of the illustrative fastener gripper of Fig. 8.
Fig. 11 is a front isometric view of yet another illustrative fastener gripper in accordance with aspects of the present teachings.
Fig. 12 is a front isometric view of yet another illustrative fastener gripper in accordance with aspects of the present teachings.
Fig. 13 is a front isometric view of yet another illustrative fastener gripper in accordance with aspects of the present teachings.
Fig. 14 is a front isometric view of yet another illustrative fastener gripper in accordance with aspects of the present teachings.
Fig. 15 is a front isometric view of yet another illustrative fastener gripper in accordance with aspects of the present teachings.
Fig. 16 is a front isometric view of yet another illustrative fastener gripper in accordance with aspects of the present teachings.
Fig. 17 is a flow chart depicting steps of an illustrative method for engaging a fastener and applying sealant onto the fastener in accordance with aspects of the present teachings.
Fig. 18 is a schematic view of yet another illustrative fastener gripper engaging a fastener in accordance with aspects of the present teachings.

### DETAILED DESCRIPTION

Various aspects and examples of a gripper for a fastener installation assembly, as well as related methods, are described below and illustrated in the associated drawings. Unless otherwise specified, a gripper in accordance with the present teachings, and/or its various components, may contain at least one of the structures, components, functionalities, and/or variations described, illustrated, and/or incorporated herein. Furthermore, unless specifically excluded, the process steps, structures, components, functionalities, and/or variations described, illustrated, and/or incorporated herein in connection with the present teachings may be included in other similar devices and methods, including being interchangeable between disclosed embodiments. The following description of various examples is merely illustrative in nature and is in no way intended to limit the disclosure, its application, or uses. Additionally, the advantages provided by the examples and embodiments described below are illustrative in nature and not all examples and embodiments provide the same advantages or the same degree of advantages.

The following definitions apply herein, unless otherwise indicated.

"Comprising," "including," and "having" (and conjugations thereof) are used interchangeably to mean including but not necessarily limited to, and are open-ended terms not intended to exclude additional, unrecited elements or method steps.

Terms such as "first", "second", and "third" are used to distinguish or identify various members of a group, or the like, and are not intended to show serial or numerical limitation.

"AKA" means "also known as," and may be used to indicate an alternative or corresponding term for a given element or elements.

In general, a fastener gripper (AKA gripper or sealant applicator) for a fastener installation assembly in accordance with the present teachings may include a body and a lip extending from a first end of the body. The body has a passage extending between the first end of the body and a second end of the body opposite the first end. The lip that extends from the first end of the body is configured to engage a fastener and includes an outlet of the passage (e.g., an aperture in a surface of the lip). An inlet of the passage is disposed at the second end of the body and the inlet is configured to couple to a sealant source to receive a sealant and/or any other suitable substance into the passage. The passage is configured to deliver the sealant received at the inlet to the outlet for application of the sealant onto a fastener engaged by the lip of the gripper.

In some examples, one or more of the grippers of the present teachings are configured to be utilized with a fastener installation assembly and/or fastener installation machine (e.g., a Gemcor machine utilized for aircraft wing panel assembly). For example, a pair of grippers may be mounted on the fastener installation machine and the pair of grippers may be configured to hold a fastener between them and apply sealant onto the fastener. In some examples, the grippers are configured to engage a fastener and apply sealant onto the same portion of the fastener that is engaged by the gripper (e.g., a non-threaded portion of a shank of the fastener). Unless otherwise specified, the term "grip length" as used herein refers to the non-threaded portion of the shank of the fastener. As described above, known systems for installing fasteners can have limitations in terms of applying sealant onto a fastener without getting sealant on the threaded portion of the fastener. This is especially the case when the unthreaded portion of the fastener (i.e., the grip length) is short. The grippers of the present teachings may be utilized with automatic fastener installation assemblies or machines to avoid the above-described problems by facilitating both engaging the non-threaded portion of the fastener and applying sealant onto the non-threaded portion (i.e., the grip length) of the fastener engaged by the gripper.

In some examples, one or more grippers in accordance with aspects of the present teachings are configured to dispense a substance other than sealant on a fastener, such as a thread locker, lubricant, flowable solid, and/or any other suitable substance(s). In many examples described herein, a gripper is configured to dispense a substance on an unthreaded portion of the fastener shank, but in other examples, a gripper may be configured to dispense a substance on a threaded portion of the shank (e.g., in some cases, on only an upper portion of the threaded portion of the shank) when doing so is appropriate (e.g., because the presence of the substance on the threads is not deleterious to that particular use case).

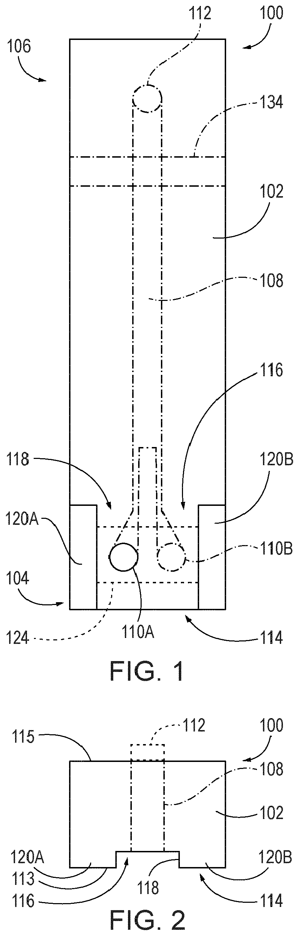

Figs. 1 and 2 schematically depict a fastener gripper 100 in accordance with aspects of the present teachings. Fastener gripper 100 may also be referred to as a sealant applicator or gripper. In some examples, gripper 100 is configured to engage a non-threaded portion of a shank of a fastener and configured to apply sealant to the non-threaded portion of the shank engaged by the gripper. By engaging the non-threaded portion of the fastener shank, the gripper holds the fastener in position and/or cooperates with another suitable object (e.g., a flat surface, another gripper similar or identical to gripper 100, a conventional gripper not configured to apply sealant, and/or any other suitable object) to hold the fastener in position. For example, a pair of grippers 100 may be disposed on opposing sides of a spindle of a fastener installation assembly (e.g., a Gemcor machine utilized for wing panel assembly) such that each gripper of the pair engages a non-threaded portion of a fastener to hold the fastener in position, and one or both grippers of the pair applies sealant to the non-threaded portion of the fastener engaged by the grippers. As shown in Figs. 1 and 2, gripper 100 includes a body 102 having a first end 104 and a second end 106 opposite the first end. A passage 108 extends through body 102 between the first end and the second end of the body. In some examples, passage 108 has an outlet 110A disposed at the first end of the body and an inlet 112 disposed at the second end of the body. Outlet 110A and inlet 112 are in fluid communication with each other via passage 108. In some examples, outlet 110A faces in a first direction and inlet 112 faces in a second direction away from the first direction. Put another way, outlet 110A may face forward and/or be disposed on a front surface 113 of body 102 and inlet 112 may extend rearward and/or be disposed on a rear surface 115 of body 102.

The first end of body 102 may include any suitable structure(s) configured to engage a fastener. For example, gripper 100 may include a lip 114 extending from the first end of body 102. In some examples, lip 114 has a recess, notch, vertical groove and/or any other suitable feature 116 configured to receive the fastener. In such examples, lip 114 may include a curved wall 118 defining recess 116 (e.g., such that the recess has an at least partially rounded shape), and curved wall 118 may be configured such that at least portions of the curved wall engage a cylindrical shank of the fastener (e.g., the non-threaded portion of the shank of the fastener). Put another way, lip 114 may include a pair of arms 120A, 120B protruding or extending from the first end of the body. Arms 120A and 120B may define between them recess 116 that is configured to engage the fastener. The fastener received by the recess may be held in place (i.e., gripped) between the wall and/or arms that define the recess and one or more other surfaces, such as a wall or arms of another gripper, a flat surface of a fastener installation machine or associated device, and/or any other suitable surface(s). In some examples, the recess is shaped to hold the fastener aligned (e.g., with an axis defined by the recess and/or by a hole in which the fastener is to be inserted) sufficiently to accurately guide the fastener as it is inserted into the hole.

In some examples, curved wall 118 and/or recess 116 are dimensioned such that at least a portion of the lip is spaced from the fastener expected to be engaged by the lip. Put another way, the lip does not perfectly conform to the shape of the fastener, such that at least a portion of the curved wall or recess does not engage the fastener. For example, the wall of the lip may have a noncircular shape (for example, a generally parabolic shape), whereas the expected fastener has a circular shape (e.g., at least a portion of the fastener shank is cylindrical). The space between the lip and the fastener permits sealant to be dispensed from the outlet of the lip and/or to be distributed along the unthreaded surface of the fastener. In some examples, a wall having a noncircular shape is better able to guide the fastener to a desired position (e.g., relative to the wall and/or relative to a workpiece in which the fastener is being installed) and/or to retain the fastener in the desired position compared to a circularly shaped wall, particularly when at least partially coated in sealant. In general, the wall of the lip may have any suitable shape(s) configured to facilitate dispensing sealant (or another suitable substance) from the outlet of the lip and/or other suitable function(s). The shape(s) of the lip may be selected based on a volume of sealant expected to be dispensed, a rate at which the sealant is expected to be dispensed, a viscosity or other property of the sealant, and/or any other suitable factors.

In some examples, curved wall 118 includes a channel or groove 124. The channel may have any suitable shape, depth, and/or orientation for facilitating sealant flow. In some examples, the channel extends azimuthally along the curved wall. Put another way, the wall defining a vertical recess of the lip may have a horizontal channel in it. In examples including channel 124 extending azimuthally along the wall, the azimuthal channel may include at least one of outlet apertures 110A, 110B. Azimuthal channel 124 may provide a gap or space between apertures 110A, 110B and a shank of the fastener engaged by curved wall 118 of the lip. In some examples in which the wall includes channel 124, a significant portion of the wall (e.g., a majority and/or entirety) outside of the channel is shaped to conform to the shape of the expected fastener. This may allow channel 124 to provide a fluid pathway extending around a portion of the fastener shank that is substantially closed on top and bottom by curved wall 118 engaging the shank of the fastener. In other examples including the channel, however, the wall is shaped such that significant portions of the wall outside the channel do not conform to the expected fastener (e.g., such that significant portions of the wall outside the channel are spaced from the fastener). In general, even in examples in which the wall is shaped to conform to an expected fastener, the gripper is able to accommodate fasteners having somewhat different shapes and/or sizes than the expected fastener; put another way, the curvature of the wall need not match the curvature of the fastener exactly.

The space provided by azimuthal channel 124 between the outlet apertures of the passage and the shank of the fastener may improve sealant flow out of the outlet apertures onto the fastener. The space provided by channel 124 may allow sealant to collect between outlet apertures 110A, 110B and the shank of the fastener and may help to control the volume of sealant that is applied onto the shank of the fastener (e.g., the channel may function as a reservoir). By extending around a portion of the shank of the fastener, azimuthal channel 124 may facilitate effectively and/or evenly spreading the sealant around the shank of the fastener. In some examples including channel 124, the curved wall is shaped such that most of or the entirety of the curved wall aside from the channel is flush against the fastener, and sealant flows mostly or entirely within the channel rather than between the wall and the fastener.

Lip 114 of the gripper may include outlet 110A of passage 108, such that the gripper is configured to apply sealant to a same portion of the fastener engaged by the gripper (e.g., the non-threaded portion of the shank of the fastener). The outlet of passage 108 may comprise any suitable structure(s) configured to dispense a substance out of passage 108 onto the fastener engaged by the gripper. For example, the outlet may comprise at least one orifice, aperture, and/or opening 110A, 110B in fluid communication with passage 108. Body 102 is configured to deliver sealant and/or any other suitable substance to apertures 110A, 110B via passage 108 for application of the sealant onto the fastener engaged by lip 114 of gripper 100. Apertures 110A, 110B may also be referred to as a first and second outlet of passage 108, respectively.

Lip 114 may include any suitable number of apertures having any suitable shape(s) and size(s) configured to dispense the sealant and/or other substance onto the fastener. Having more than one outlet aperture of passage 108 may facilitate improved sealant flow out of the passage onto the fastener and/or improved spreading of the sealant around the fastener. For example, when applying sealant for installation of at least some fasteners having relatively large diameters, a gripper with more than one outlet may be able to dispense sealant over a greater area of the fastener grip length (in some cases, 100% or nearly 100% coverage) than a gripper with a single outlet.

On the other hand, in some examples, a single outlet may facilitate flow for certain substances better than two or more outlets are able to. For example, a gripper having two or more outlets may be unable effectively facilitate flow of a substance if the viscosity of the substance is so great that relatively little of the substance is able to flow through the passage of the gripper to the two outlets (i.e., such that relatively little substance exits from the apertures and/or the substance flows poorly from the two apertures). In some examples having two or more outlets, it may be possible to avoid this problem by providing a dedicated passage for each outlet, but fitting two or more passages inside the gripper may require making the gripper too large to effectively help grip a fastener and/or fit in a fastener installation assembly. In general, however, any suitable configuration of outlet apertures may be designed based on sealant properties (e.g., viscosity), a desired amount of sealant flow (e.g., an amount sufficient to cover a desired portion of the fastener grip length, to deposit a sealant layer having a desired thickness on the fastener, etc.), a size of the fastener intended to be engaged by the gripper, and/or on any other suitable factors.

In some examples, at least one of outlet apertures 110A, 110B are formed in curved wall 118 defining the recess of the lip, such that gripper 100 is configured to engage and apply sealant to a same portion of the fastener (e.g., the non-threaded portion, or grip length, of the fastener).

Passage 108 includes inlet 112 disposed at the second end of body 102. Inlet 112 and outlet apertures 110A, 110B are in fluid communication with each other via passage 108. Inlet 112 may comprise any suitable structure(s) configured to receive a sealant and/or any other suitable substance into passage 108. In some examples, inlet 112 comprises a structure that is configured to be coupled to flexible and/or rigid tubing of a sealant device via a threaded connection, an adhesive, a luer-lock connection, and/or via any other suitable connection mechanism(s). For example, inlet 112 may comprise an aperture formed in a wall of the second end of body 102 and/or a hollow stem extending from the second end of body 102. In some examples, inlet 112 comprises a nipple (e.g., a barbed nipple) configured to be coupled to flexible tubing of a sealant source. In some examples, inlet 112 comprises a nipple that has a similar or same dimension as the inlet nipples of conventional sealant injectors, such that gripper 100 is able to be utilized in a fastener installation system that also uses (or previously used) conventional sealant injectors.

In some examples, lip 114 of body 102 extends forward from the first end of the body in a first direction and inlet 112 extends rearward from the second end of the body in a second direction. In such examples, the second direction may be antiparallel to the first direction or the second direction may be transverse to the first direction. In general, inlet 112 may extend rearward from the rear surface of body 102 at any suitable angle relative to the first direction. For example, inlet 112 may extend from the rear surface of body 102 at a 0-degree angle (horizontally), at a 30-degree angle, 45-degree angle, and/or any other suitable angle relative to the first direction. In some examples, having inlet 112 extend at a non-zero angle relative to the first direction may provide improved clearance for flexible tubing coupling inlet 112 to a sealant source.

In some examples, gripper 100 is configured to be mounted on and/or coupled to a fastener installation assembly and/or a fastener installation machine (for example, a Gemcor machine). Gripper 100 may include any suitable structure(s) configured to engage a feature of the fastener installation assembly to couple the gripper to the assembly. For example, gripper 100 may include a groove 134 formed in body 102 that is configured to receive or couple to a peg of the fastener installation assembly. In some examples, groove 134 is formed in the rear surface of body 102. Groove 134 may define a hook in the body, the hook being configured to couple to the peg.

In some examples, gripper 100 is configured to pivotably couple to the fastener installation assembly. For example, the gripper may be configured to pivot about the peg received in groove 134 of the gripper. Pivoting may allow the gripper (or fastener installation assembly) to receive and/or disengage from a fastener. For example, in examples in which the assembly includes a pair of grippers configured to grip the fastener between them, the grippers may be configured to pivot away from each other to allow the fastener to be moved into place between them, and then to pivot back toward each other to grip the fastener cooperatively between the respective lips of the grippers. Additionally, or alternatively, the grippers may be pivoted away from each other when the fastener is screwed into the workpiece (e.g., an airplane wing) so that the grippers do not obstruct the fastener.

In some examples, first end 104 of body 102 is a lower end (e.g., bottom end) of the body of the gripper, when the gripper is coupled to the fastener installation assembly. Put another way, during normal use, body 102 of the gripper may be oriented such that first end 104 of the body is generally downward, and second end 106 of the body is generally upward. This may allow sealant to be assisted by gravity as it flows through passage 108 from inlet 112 to outlets 110A, 110B. However, gripper 100 may be configured to be utilized in any suitable orientation.

Gripper 100 may be made of any suitable material(s) and may be manufactured by any suitable method(s). For example, body 102 of gripper 100 may comprise metal (e.g., aluminum, steel, and/or any other suitable metals), plastic, and/or any other suitable material. In some examples, body 102 of the gripper is additively manufactured. Metal components may be reusable but may require soaking in a chemical bath to clean, whereas plastic components may either be cleaned or be disposed of instead of cleaning, which may be economical for a component made of plastic. In some examples, gripper 100 is configured to be replaced after a single use and/or after a set (or variable) period of time (e.g., a single manufacturing shift, a single day, a period determined by the cure time of the sealant, etc.). In such examples, gripper 100 may be replaced by an identical replacement gripper after the period of time has elapsed. In some examples, gripper 100 may be additively manufactured from a suitable material, such as one or more plastics.

In some examples, a structure comprising two or more grippers may be formed as a single integral part (e.g., by additive manufacturing and/or another suitable method). For example, two or more grippers may be connected to one another at their upper ends, with respective bodies of the grippers extending from the unified upper end. The grippers of the integral part may be flexible enough to separate or widen as a fastener is driven through them.

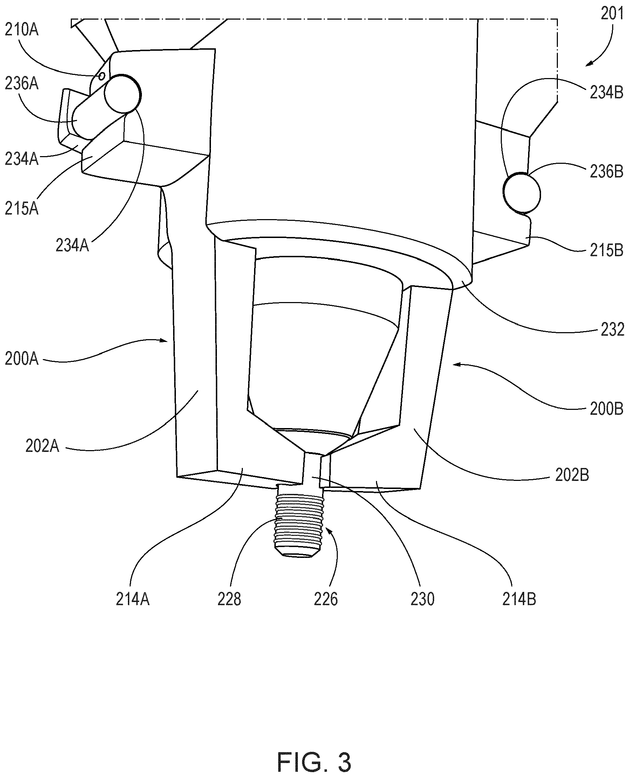

Fig. 3 depicts a fastener installation assembly 201 including a pair of separate grippers 200A and 200B, which are each an example of gripper 100 depicted schematically in Figs. 1 and 2. As shown in Fig. 3, grippers 200A, 200B may be utilized in fastener installation assembly 201 to engage a fastener 226 that is to be installed by the fastener installation assembly into a workpiece. Each gripper 200A, 200B includes a respective lip 214A, 214B configured to engage a shank 228 of the fastener and each of the lips includes at least one aperture (not shown) configured to dispense sealant onto the shank of the fastener. Specifically, as shown in Fig. 3, lips 214A, 214B of each gripper are configured to cooperatively engage a non-threaded portion 230 of the shank of the fastener. In some examples, fastener installation machine 201 comprises a Gemcor machine utilized for automatically installing fasteners in the manufacturing process of aircraft wings.

As shown in Fig. 3, fastener installation assembly 201 includes a spindle assembly 232. Grippers 200A, 200B are disposed on opposing sides of spindle assembly 232. Gripper 200A includes groove 234A that is configured to receive a first peg 236A of spindle assembly 232. Groove 234A is formed in a rear surface 215A of a body 202A of the gripper. Peg 236A is disposed in groove 234A of the gripper to retain gripper 200A on a first side of spindle assembly 232. Similarly, gripper 200B includes a groove 234B. Groove 234B is formed in a rear surface 215B of a body 202B of gripper 200B. Groove 234B receives a second peg 236B of spindle assembly 232 to couple gripper 200B to a second side of the spindle assembly opposite the first side. Grippers 200A, 200B are retained on opposing sides of spindle assembly 232 by the pegs disposed in the grooves, such that respective lips 214A, 214B of the grippers engage opposing sides of fastener 226 to be installed in a workpiece by spindle assembly 232.

In some examples, grippers 200A, 200B are coupled to fastener installation assembly 201 in a manner that permits the grippers to rotate outward (away from the fastener) and/or inward (toward the fastener). For example, grippers 200A, 200B may be able to rotate about pegs 236A, 236B. This allows the grippers to be pivoted outward to permit the fastener to be placed between them and then to pivot inward to grip the fastener between them.

As shown in Fig. 3, gripper 200A includes an inlet aperture 210A configured to receive a sealant and/or any other suitable substance into a passage of gripper 200A. Gripper 200B may include a substantially similar inlet aperture.

An example process of installing fastener 226 may include holding fastener 226 between lips 214A and 214B of grippers 200A and 200B. As described above with reference to gripper 100, each gripper 200A and 200B has a passage (e.g., extending through the body of the gripper) and the passage has an inlet 210A coupled to a sealant source. The example process of installing fastener 226 may further include receiving at the inlet of each gripper 200A and 200B sealant from the sealant source and applying the sealant onto the shank of the fastener held by the lips of the grippers. The sealant may be applied onto the shank of the fastener through the outlet(s) of the passage(s) disposed at the lips engaging the fastener. Fastener 226 may then be inserted into a workpiece (e.g., a wing of an airplane) and tightened by the fastener installation assembly.

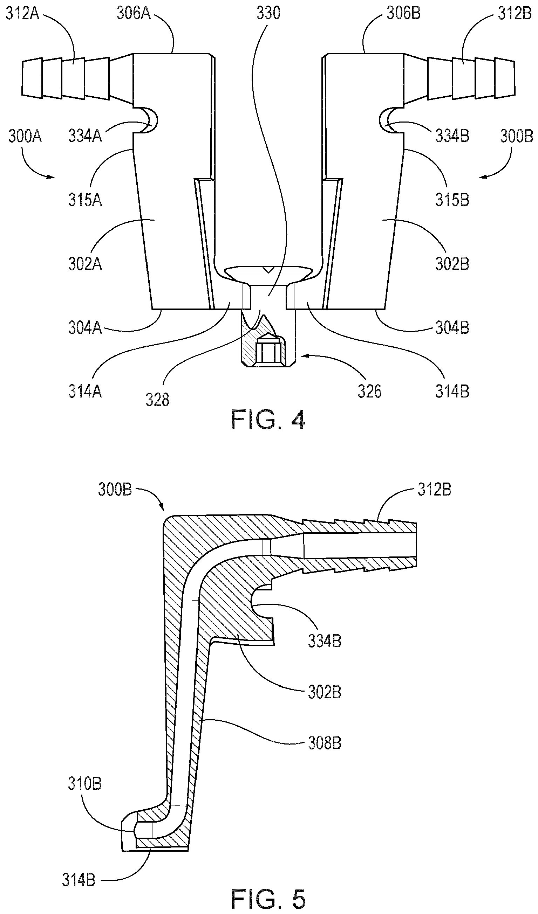

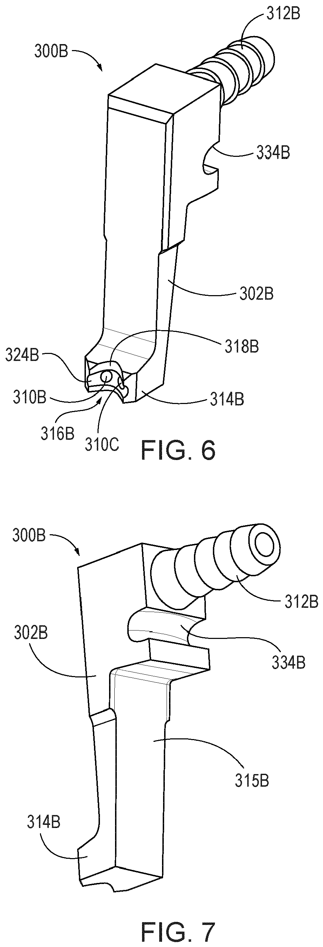

Fig. 4 depicts a pair of illustrative grippers 300A and 300B, which are examples of gripper 100, described above. Fig. 5 is a sectional view of gripper 300B. Figs. 6 and 7 are isometric views of gripper 300B. Grippers 300A and 300B are substantially similar to each other.

As shown in Fig. 4, grippers 300A, 300B may be utilized to engage and securely hold a fastener 326. Gripper 300A includes a body 302A having a lip 314A extending from a first end 304A of the body. Lip 314A is configured to engage a shank 328 of fastener 326. In some uses, gripper 300A is positioned such that lip 314A engages an unthreaded portion 330 of the shank of fastener 326. This allows sealant dispensed from an orifice of the lip (see, e.g., Fig. 5 and associated description below) to be dispensed on the unthreaded portion of the fastener rather than a threaded portion of the fastener. Gripper 300B is substantially similar to gripper 300A, having a body 302B and a lip 314B extending from a first end 304B of body 302B.

Grippers 300A and 300B are configured to be utilized with a fastener installation assembly and/or a fastener installation machine. Gripper 300A includes a groove 334A formed in a rear surface 315A of body 302A. Groove 334A is configured to receive a peg and/or other suitable feature of the fastener installation assembly to couple the gripper to the assembly. Gripper 300B includes a similar groove 334B formed in a rear surface 315B of body 302B.

In some examples, grippers 300A and 300B are each configured to pivot about the respective peg received in the groove of that gripper. Pivoting may allow the gripper (or fastener installation assembly) to receive and/or disengage from a fastener. For example, the grippers may be configured to pivot away from each other to allow the fastener to be moved into place between them (e.g., with the shank of the fastener forcing the lips of the grippers apart as the shank moves between the lips), and then to pivot back toward each other (e.g., with the shank disposed in the space defined between the recesses of the lips) to grip the fastener cooperatively between the respective lips of the grippers. Additionally, or alternatively, the grippers may be pivoted away from each other when the fastener is screwed into the workpiece (e.g., an airplane wing) so that the grippers do not obstruct the fastener.

As shown in Fig. 5, which is a sectional view of gripper 300B, gripper 300B includes a passage 308B extending from a first end 304B to a second end 306B of body 302B. Passage 308B includes an inlet 312B disposed at the second end of body 302B and a pair of outlets 310B, 310C (see Fig. 6) disposed at the first end of body 302B. Inlet 312B is configured to receive sealant and/or any other suitable substance into passage 308B and outlets 31 0B, 310C are configured to dispense the sealant onto a fastener engaged by the gripper. Inlet 312B is in fluid communication with outlets 310B, 310C via passage 308B. Gripper 300A is substantially similar to gripper 300B, including an inlet 312A disposed at a second end 306A of body 302A and a pair of outlets (not shown) disposed at first end 304A of body 302A.

Outlets 310B, 310C of gripper 300B may each comprise any suitable structure(s) configured to dispense the sealant onto the fastener. In the depicted example, outlets 310B, 310C each comprise an aperture formed in a curved wall 318B of lip 314B. As shown in Fig. 6, curved wall 318B defines a recess 316B configured to engage the fastener. Having more than one outlet aperture may facilitate improved sealant flow out of the passage and spreading of sealant around the fastener engaged by the gripper. In general, however, gripper 300B may have any suitable number of outlet apertures, including one aperture. In examples including more than one aperture, the apertures need not all have the same size or shape.

As shown in Fig. 6, lip 314B of gripper 300B includes an azimuthal channel 324B formed in curved wall 318B of the lip. Azimuthal channel 324B extends horizontally along curved wall 318B, which extends vertically. Azimuthal channel 324B includes each of the outlet apertures of passage 308B. Azimuthal channel 324B may provide a space between the outlet apertures and the shank of the fastener engaged by curved wall 318B. Azimuthal channel 324B may facilitate effectively and evenly spreading the sealant around the fastener engaged by the gripper by providing a space for sealant to flow around a portion of the circumference of the fastener. In some examples, channel 324B provides a space for sealant to collect between outlet apertures 310B, 310C and the shank of the fastener and may help to control the volume of sealant that is applied to the shank of the fastener. Other than channel 324B, curved wall 318B is shaped to generally conform to the curvature of the expected fastener. This allows curved wall 318B to sit flush against the fastener and enclose channel 324B, such that the channel is an enclosed pathway for sealant to flow. This may facilitate even distribution of the sealant around the countersink of the hole and the unthreaded portion of the fastener.

In general, curved wall 318B may have any configuration suitable for cooperating with another gripper to grip the fastener and for facilitating sealant flow; a suitable configuration may be designed based on sealant properties (e.g., viscosity), a desired amount of sealant flow (e.g., an amount sufficient to cover a desired portion of the fastener grip length, to deposit a sealant layer having a desired thickness on the fastener, etc.), and/or on any other suitable factors. In some examples, gripper 300B may not include azimuthal channel 324B and outlet apertures may be disposed on curved wall 318B.

Inlet 312B may comprise any suitable structure(s) configured to receive sealant into passage 308B. As shown in Figs. 4-7, inlet 312B comprises a barbed nipple. Inlet 312B is configured to couple to a sealant source to receive sealant into passage 308B. For example, inlet 312B may couple to flexible and/or rigid tubing of the sealant source to receive the sealant into the passage. In some examples, inlet 312B comprises a barbed nipple that has a similar or same dimension as the inlet nipples of conventional sealant injectors, such that gripper 300B is able to be utilized in a fastener installation system that also uses (or previously used) conventional sealant injectors.

As shown in Figs. 4-7, inlet 312B of gripper 300B extends rearward from the second end of body 302B and lip 314B extends forward from the first end of body 302B. Having the inlet extend rearward and the lip extend forward may facilitate improved clearance for the flexible tubing coupling inlet 312B to the sealant source. In the example of Figs. 4-7, lip 314B extends forward from the first end of the body in a first direction and inlet 312B extends rearward from the second end of the body in a second direction. The second direction is substantially antiparallel to the first direction. In other words, inlet 312B extends rearward from the second end of the body at a 0-degree angle relative to the first direction.

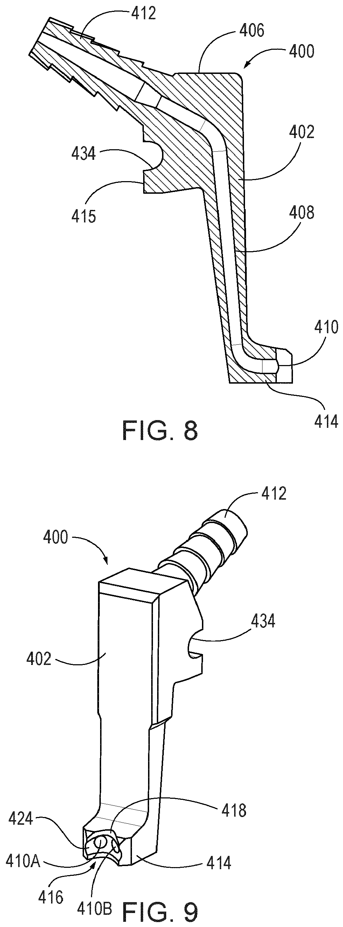

Figs. 8-10 depict an illustrative gripper 400, which is another example of gripper 100 described above. Gripper 400 is substantially similar to grippers 300A, 300B, with a difference being that a body 402 of gripper 400 includes a lip 414 extending forward from a first end of the body in a first direction and an inlet 412 extending rearward from a second end 406 of the body in a second direction that is transverse (and not antiparallel) to the first direction. In other words, inlet 412 extends rearward from the second end of the body at a non-zero angle relative to the first direction (in comparison to grippers 300A, 300B, inlet 412 extends rearward at an upward angle). In the depicted example, inlet 412 extends rearward at a 30-degree angle relative to a direction antiparallel to the first direction, but in other examples, the inlet may extend at any other suitable transverse angle(s). Having the inlet extend rearward at a non-zero angle relative to the first direction may facilitate improved clearance for the flexible tubing coupling the inlet to the sealant source. For example, inlet 412 extending rearward at the non-zero angle may provide increased distance between the inlet and a groove 434, which is formed in a rear surface 415 of the body and configured to operatively couple the gripper to a fastener installation assembly (e.g., by receiving a peg or other suitable protrusion of the assembly).

Inlet 412 is in fluid communication via a passage 408 with an outlet 410, which comprises outlet apertures 410A, 410B. Apertures 410A, 410B are formed in a curved wall 418 that defines a recess 416 of lip 414. A channel 424 extends azimuthally along curved wall 418 and apertures 410A, 410B are disposed in the channel.

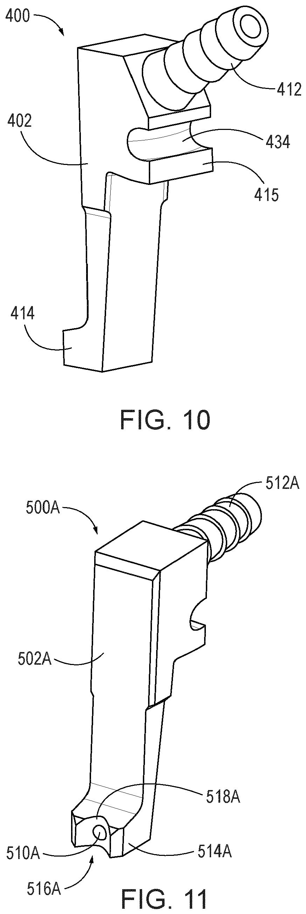

Figs. 11-13 depict illustrative grippers 500A, 500B, and 500C, which are each an example of gripper 100 described above. As shown in Figs. 11-13, each gripper 500A, 500B, and 500C includes a respective body 502A, 502B, and 502C having a respective lip 514A, 514B, 514C configured to engage a fastener. Lips 514A, 514B, 514C each include a respective curved wall 518A, 518B, 518C defining a respective recess 516A, 516B, 516C that is configured to engage the fastener. Each gripper 500A, 500B, 500C includes a respective inlet 512A, 512B, and 512C extending rearward from a second end of the body of the gripper, and the respective lip extends forward from a first end of the body of the gripper. Lips 514A, 514B, 514C each extend forward from the first end of the body in a first direction and inlets 512A, 512B, 512C each extend rearward from the second end of the body in a second direction. The second direction is substantially antiparallel to the first direction. In other words, the inlet of each gripper 500A, 500B, 500C extends rearward at a 0-degree angle relative to the first direction of each gripper.

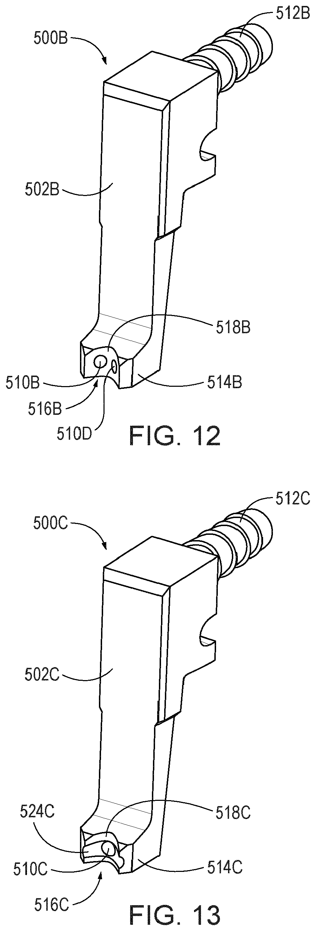

Gripper 500A, depicted in Fig. 11, includes a single outlet aperture 510A formed in curved wall 518A and configured to dispense sealant onto the fastener. Gripper 500B, depicted in Fig. 12, includes a pair of outlet apertures 510B, 510D formed in curved wall 518B and each configured to dispense the sealant onto a fastener engaged by the gripper. Gripper 500C, depicted in Fig. 13, includes a single outlet aperture 510C configured to dispense the sealant onto the fastener. Gripper 500C includes an azimuthal channel or groove 524C formed in curved wall 518C, and outlet aperture 510C is formed in the channel. (In contrast, gripper 500B of Fig. 12 has no azimuthal channel in lip 514B; instead, the wall defining the recess of lip 514B is free of channels or other deformations.)

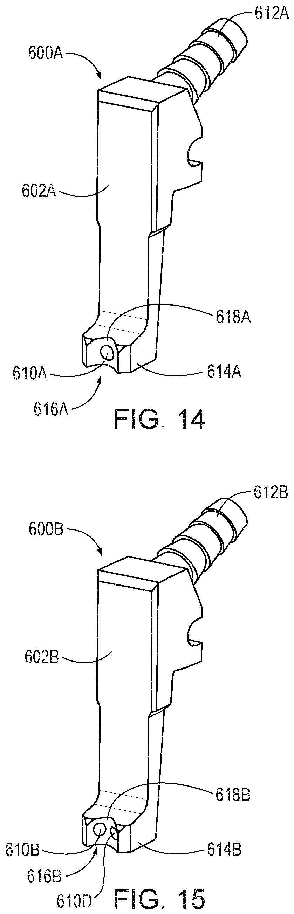

Figs. 14-16 depict illustrative grippers 600A, 600B, and 600C, which are examples of grippers 100, each gripper 600A, 600B, and 600C includes a respective lip 614A, 614B, 614C configured to engage a fastener. Lips 614A, 614B, 614C each include a respective curved wall 618A, 618B, 618C defining a respective recess 616A, 616B, 616C that is configured to engage the fastener. Recess 616A, 616B are free of any azimuthal channels or other deformations; recess 616C has an azimuthal channel, as described below.

Each gripper 600A, 600B, and 600C includes a respective barbed nipple 612A, 612B, and 612C. The barbed nipples are inlets to a passage extending through respective bodies 602A, 602B, and 602C of the grippers. As shown in Figs. 14-16, lips 614A, 614B, 614C extend forward in a first direction and barbed nipples 612A, 612B, 612C extend rearward in a second direction transverse to the first direction. Barbed nipples 612A, 612B, 612C may extend rearward at any suitable angle (e.g., 30-degree angle, 45-degree angle, etc.) relative to the first direction. In the depicted example, barbed nipples 612A, 612B, 612C extend rearward at a 30-degree angle.

Gripper 600A, depicted in Fig. 14, includes a single outlet aperture 610A configured to dispense sealant onto the fastener. Outlet aperture 610A is disposed in curved wall 618A of gripper 600A. Outlet aperture 610A is in fluid communication with the passage extending through the body of gripper 600A and in fluid communication with inlet 612A via the passage.

Gripper 600B, depicted in Fig. 15, includes a pair of outlet apertures 610B, 610D each configured to dispense the sealant onto the fastener. Outlet apertures 610B, 610D are in fluid communication with inlet 612B of the gripper via the passage extending through the body of the gripper.

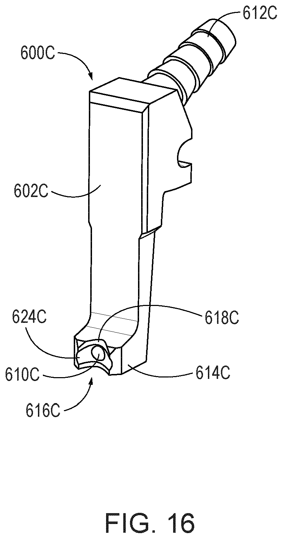

Gripper 600C, depicted in Fig. 16, includes a single outlet aperture 610C configured to dispense the sealant onto the fastener. Gripper 600C includes an azimuthal channel or groove 624C formed in curved wall 618C. Azimuthal channel 624C includes outlet aperture 610C. Azimuthal channel 624C is configured to facilitate spreading of the sealant dispensed from the outlet aperture around the fastener engaged by the gripper.

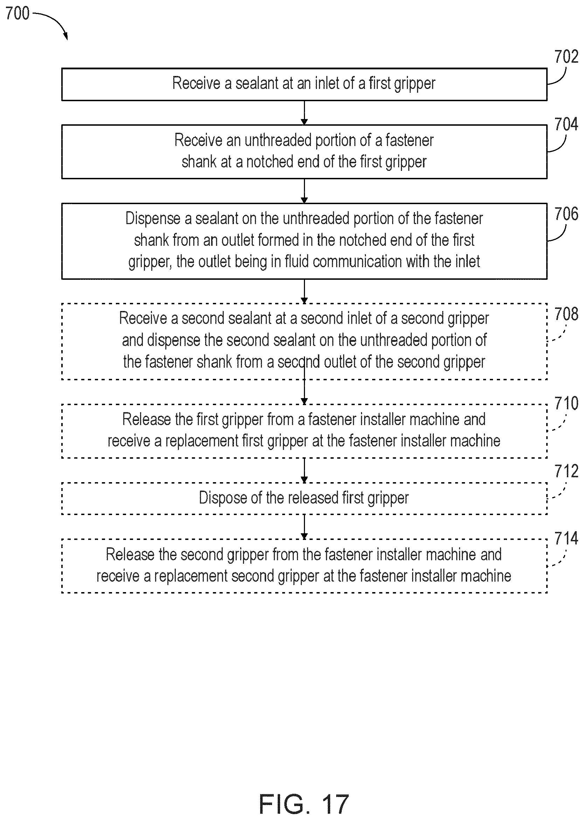

Fig. 17 is a flowchart illustrating steps performed in an illustrative method 700 for applying sealant to a fastener. In some examples, method 700 includes (or is part of another method that includes) additional method steps not depicted in Fig. 17. Although various steps of method 700 are described below and depicted in Fig. 17, the steps need not necessarily all be performed, and in some cases may be performed simultaneously or in a different order than the order shown. Aspects of grippers 100, 200A-B, 300A-B, 400, 500A-C, and 600A-C may be utilized in the method steps described below. Where appropriate, reference may be made to components and systems that may be used in carrying out each step. These references are for illustration, and are not intended to limit the possible ways of carrying out any particular step of the method.

At step 702, method 700 includes receiving sealant at an inlet of a first gripper. The inlet of the gripper may comprise any suitable structure(s) configured to receive the sealant. In some examples, the inlet comprises a barbed nipple extending from a body the gripper that is configured to couple to flexible tubing of a sealant source. The inlet may be an inlet of a passage extending through a body of the gripper and the inlet may be configured to receive the sealant into the passage.

At step 704, method 700 includes receiving an unthreaded portion of a shank of a fastener using the first gripper. By receiving the unthreaded portion of the shank, the first gripper holds the fastener in position and/or cooperates with another object to hold the fastener in position. In some examples, the first gripper holds the fastener in position by retaining the unthreaded portion of the shank against a surface of another object, such as a component of a fastener installation assembly. In some examples, the first gripper is configured to hold a fastener without the aid of another surface (e.g., the first gripper may have a recess dimensioned to securely hold the fastener). In some examples, the first gripper is configured to retain a fastener on a suitably shaped pushing tool (e.g., with a single tang retaining the fastener in a suitably shaped cavity).

In some examples, the first gripper is configured to cooperate with a second gripper to hold the fastener in position. For example, step 704 may include contacting the unthreaded portion of the fastener shank with both the first and second grippers. In some examples, step 704 includes holding the unthreaded portion of the shank between respective notched ends of the first gripper and the second gripper. For example, the respective notched ends may be disposed on opposing sides of the unthreaded portion of the shank when holding the unthreaded portion. The respective notched ends of the first and second gripper may each include a curved wall configured to engage the unthreaded portion of the shank of the fastener. In some examples, the notched end of each gripper is disposed at a respective first end of the body of the gripper and the respective inlet of each gripper is disposed at a respective second end of the body of the gripper. In some examples, the first gripper is configured to cooperate with more than one other gripper to hold the fastener in position.

At step 706, method 700 includes dispensing sealant on the unthreaded portion of the fastener shank from an outlet formed in the first gripper (e.g., in the notched end of the first gripper). As described above, the unthreaded portion of the fastener is also engaged by the gripper at step 704. Accordingly, step 706 may be described as dispensing sealant on the portion of the fastener that is engaged by the gripper, because the unthreaded portion of the fastener both is engaged by the gripper and receives the sealant. In examples in which the first gripper comprises a notched end configured to hold the fastener shank, the outlet may comprise an opening formed in the notched end of the first gripper that is holding the shank. The outlet is in fluid communication with the inlet via a passage extending through the body of the gripper. Dispensing the sealant may include delivering the sealant from the inlet to the outlet via a hollow interior portion of the first gripper (e.g., via a hollow passage within the body of the first gripper connecting the inlet to the outlet).

At step 708, method 700 optionally includes receiving a second sealant at a second inlet of a second gripper (e.g., a second gripper cooperating with the first gripper to hold the fastener) and dispensing the second sealant on the unthreaded portion of the fastener shank from a second outlet of the second gripper. A body of the second gripper includes the second inlet and the second outlet. The second inlet and the second outlet of the second gripper are in fluid communication via a passage extending through the body of the second gripper. The second inlet and the second outlet of the second gripper may be substantially similar to the first inlet and first outlet of the first gripper. The second sealant may be the same type of sealant as the first sealant; in some examples, the second sealant and first sealant are received from a same source of sealant (e.g., a same container of sealant).

At step 710, method 700 optionally includes releasing the first gripper from a fastener installer machine and receiving a replacement first gripper at the fastener installer machine. After use, sealant may build up in the passage of the first gripper and block further sealant from passing through the gripper to be dispensed onto the fastener. Accordingly, it may be advantageous to replace the first gripper with a clean gripper that lacks sealant buildup. The first gripper may be replaced by the replacement first gripper after any suitable period of time (e.g., after a single use, a single shift, etc.).

At step 712, method 700 optionally includes disposing of the released first gripper (e.g., because it is designed to be disposable). In some examples, the released first gripper is additively manufactured and/or comprises plastic, such that the released first gripper is configured to be disposed of after use (e.g., because the first gripper and replacement gripper can be manufactured inexpensively and/or quickly, making it economical to dispose of the gripper and replace it rather than clean it). In some examples, however, the first gripper is configured to be cleaned and reused at a later time.

At step 714, method 700 optionally includes releasing the second gripper from the fastener installer machine and receiving a replacement second gripper at the fastener installer machine. The process of releasing and replacing the second gripper may be substantially similar to the process of releasing and replacing the first gripper described in step 710 of method 700.

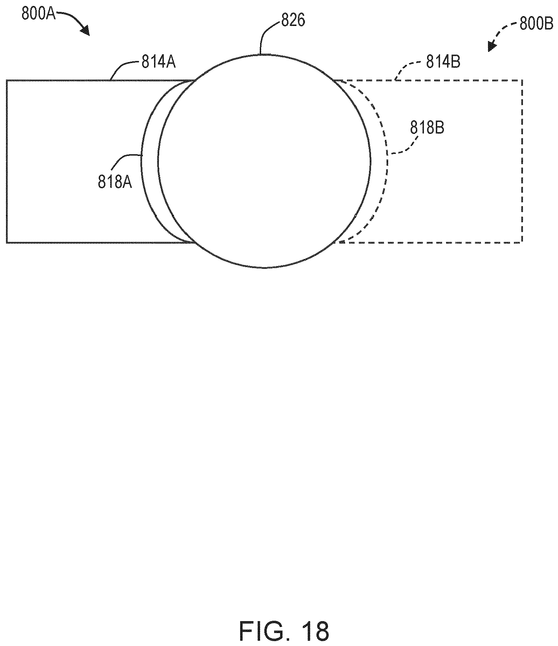

Fig. 18 depicts an illustrative gripper 800A engaging a fastener 826. As shown in Fig. 18, gripper 800A includes a lip 814A having a curved wall 818A. Curved wall 818A is dimensioned such that at least a portion of the wall is spaced from the fastener. Put another way, the curved shape of the wall of the lip does not perfectly conform to the shape of the fastener, such that at least a portion of the curved wall (e.g., above or below the azimuthal channel) does not engage the fastener. The space between the lip and the fastener facilitates dispensing sealant from outlet apertures formed in the curved wall along the surface of the fastener. In some examples, a second gripper 800B substantially similar to gripper 800A grips the other side of the fastener. Second gripper 800B includes a lip 814B having a curved wall 818B.

The following section describes additional aspects and features of a fastener gripper, presented without limitation as a series of paragraphs, some or all of which may be alphanumerically designated for clarity and efficiency. Each of these paragraphs can be combined with one or more other paragraphs, and/or with disclosure from elsewhere in this application in any suitable manner. Some of the paragraphs below expressly refer to and further limit other paragraphs, providing without limitation examples of some of the suitable combinations. Some of the paragraphs below include reference numerals used elsewhere in the present disclosure to refer to particular example elements and/or method steps; these reference numerals are included below as illustrative non-limiting examples of subject matter described by the paragraph in question.
A1. A gripper for a fastener installation assembly, the gripper comprising:
   a body, the body comprising a first end and a second end opposite the first end, and the body having a passage extending between the first end and the second end; and
   a lip extending from the first end of the body, the lip being configured to engage an unthreaded portion of a fastener and having at least one orifice in fluid communication with the passage;
   wherein the body is configured to deliver sealant to the orifice via the passage for application to the unthreaded portion of the fastener engaged by the lip.
A2. The gripper of paragraph A1, further comprising an inlet to the passage, opposite the orifice.
A2.1. The gripper of paragraph A2, wherein the inlet extends antiparallel to the lip.
A2.2. The gripper of any one of paragraphs A2 - A2.1, wherein the inlet comprises a nipple.
A2.3. The gripper of any one of paragraphs A2 - A2.2, wherein the lip extends forward from the first end of the body in a first direction and the inlet extends rearward from the second end of the body antiparallel to the first direction.
A2.4. The gripper of any one of paragraphs A2 - A2.2, wherein the lip extends forward from the first end of the body in a first direction and the inlet extends rearward from the second end of the body transverse to the first direction.
A3. The gripper of any one of paragraphs A1 - A2.4, wherein the lip has a recess configured to receive the unthreaded portion of the fastener.
A3.1 The gripper of paragraph A3, wherein the recess of the lip is configured to cooperate with a second gripper to grip the fastener when the unthreaded portion of the fastener is received by the recess.
A4. The gripper of paragraph A3, wherein the recess has a rounded shape.
A5. The gripper of any one of paragraphs A3 - A4, wherein the lip comprises a curved wall defining the recess and the curved wall has a channel.
A5.1 The gripper of paragraph A5, wherein the channel extends azimuthally along the curved wall.
A6. The gripper of any one of paragraphs A1 - A5.1, wherein the body is configured to be operatively coupled to the fastener installation assembly.
A6.1 The gripper of paragraph A6, wherein the body comprises a rear surface having a groove configured to be operatively coupled to the fastener installation assembly.
A6.2 The gripper of paragraph A6.1, wherein the groove is configured to receive a peg of the fastener installation assembly.
A6.3 The gripper of any one of paragraphs A6 - A6.2, wherein the body is configured to be operatively coupled to the fastener installation assembly such that the gripper is selectively movable relative to the fastener installation assembly.
A6.4 The gripper of paragraph A6.3, wherein the body is configured to be operatively coupled to the fastener installation assembly such that the gripper is selectively pivotable relative to the fastener installation assembly.
A7. The gripper of any one of paragraphs A1 - A6.4, wherein the at least one orifice comprises at least two orifices each in fluid communication with the passage of the body.
A8. The gripper of any one of paragraphs A1 - A7, wherein the lip is configured to engage an unthreaded portion of the fastener and the body is configured to deliver sealant to the orifice via the passage for application to the unthreaded portion of the fastener.
A9. The gripper of any one of paragraphs A1 - A8, wherein the gripper is a first gripper configured to grip the fastener in cooperation with a second gripper.
A10. The gripper of any one of paragraphs A1 - A9, wherein the gripper is additively manufactured.
A11. A method, comprising additively manufacturing the gripper of any one of paragraphs A1 - A9.
A12. A fastener installation assembly comprising:
   a spindle assembly; and
   a pair of grippers according to any one of paragraphs A1 - A9 disposed on opposing sides of the spindle assembly.
A13. The fastener installation assembly of paragraph A12 when depending from paragraph A6.2, further comprising the pegs;
   wherein the grippers of the pair of grippers are retained on the opposing sides of the spindle assembly by respective pegs engaging the respective grooves of the grippers, such that respective lips of the grippers are configured to engage opposing sides of an unthreaded grip length of a fastener to be installed in a workpiece by the spindle assembly.
A14. A kit comprising a pair of grippers according to any one of paragraphs A1 - A9.
B1. A sealant applicator comprising:
   a body comprising a first end and a second end opposite the first end, wherein the body has an outlet at the first end and an inlet at the second end, the inlet and outlet being in fluid communication with each other; and
   a pair of arms protruding from the first end of the body;
   wherein the inlet faces in a first direction and the outlet faces in a second direction away from the first direction.
B1.1 The sealant applicator of paragraph B1, wherein the pair of arms are configured to receive between them an unthreaded portion of a fastener.
B2. The sealant applicator of paragraph B1.1, wherein the pair of arms define between them a rounded recess configured to receive the unthreaded portion of the fastener.
B3. The sealant applicator of any one of paragraphs B1 - B2, further comprising a hook portion extending from the body in the second direction and configured to engage a protrusion of a fastener installation machine to mount the sealant applicator to the fastener installation machine.
B4. The sealant applicator of any one of paragraphs B1 - B3, wherein the first end of the body has a channel, and the outlet is disposed in the channel.
B4.1 The sealant applicator of paragraph B4, wherein the channel extends horizontally along at least a portion of the first end of the body.
B5. The sealant applicator of any one of paragraphs B1 - B4, wherein the outlet is a first outlet, the sealant applicator further comprising at least a second outlet in fluid communication with the inlet.
B6. The sealant applicator of any one of paragraphs B1 - B5, wherein the inlet comprises a nipple extending from the second end of the body in the first direction.
B7. The sealant applicator of paragraph B6, wherein the first direction is antiparallel to the second direction.
B8. The sealant applicator of any one of paragraphs B1 - B7, wherein the sealant applicator is additively manufactured.
B8.1 The sealant applicator of any one of paragraphs B1 - B8, wherein the sealant applicator is a first sealant applicator configured to cooperate with a second sealant applicator to cooperatively grip the unthreaded portion of the fastener.
B9. A method comprising additively manufacturing the sealant applicator of any one of paragraphs B1 - B8.
B10. A kit comprising a pair of sealant applicators according to any one of paragraphs B1 - B8.
B11. A fastener installation assembly comprising a spindle assembly and a pair of sealant applicators according to any one of paragraphs B1 - B8 disposed on opposing sides of the spindle assembly, wherein the pair of sealant applicators are configured to grip a fastener between them.
B12. The fastener installation assembly of paragraph B11, wherein the sealant applicators of the pair of sealant applicators are retained on the opposing sides of the spindle assembly by respective pegs engaging respective hooks of the sealant applicators, such that the respective pairs of arms of the sealant applicators engage opposing sides of an unthreaded grip length of a fastener to be installed in a workpiece by the spindle assembly, and the respective outlets of the sealant applicators are positioned to dispense a sealant on the unthreaded grip length.
C1. A method of applying sealant, the method comprising:
   receiving a sealant at an inlet of a first gripper;
   receiving an unthreaded portion of a fastener shank at a notched end of the first gripper; and
   dispensing a sealant on the unthreaded portion of the fastener shank from an outlet formed in the notched end of the first gripper, the outlet being in fluid communication with the inlet.
C2. The method of paragraph C1, further comprising delivering the sealant from the inlet to the outlet via a hollow interior portion of the first gripper.
C3. The method of any one of paragraphs C1 - C2, further comprising releasing the first gripper from a fastener installer machine and receiving a replacement first gripper at the fastener installer machine.
C4. The method of paragraph C3, further comprising disposing of the released first gripper.
C4.1 The method of any one of paragraphs C1 - C4, further comprising receiving the unthreaded portion of the fastener shank at a notched end of a second gripper, such that the respective notched ends of the first and second grippers cooperatively grip the unthreaded portion of the fastener shank.
C5. The method of paragraph C4.1,
   wherein the second gripper has a second outlet formed in the notched end of the second gripper and a second inlet in communication with the second outlet;
   the method further comprising receiving a second sealant at the second inlet and dispensing the second sealant on the unthreaded portion of the fastener shank from the second outlet.
C6. The method of paragraph C5, further comprising releasing the second gripper from a fastener installer machine and receiving a replacement second gripper at the fastener installer machine.
C7. A method of installing a fastener, the method comprising applying sealant to the fastener according to the method of any one of paragraphs C1 - C6.
C8. The method of paragraph C7, further comprising installing the fastener in a workpiece after dispensing the sealant on the unthreaded portion of the fastener shank.
C9. The method of any one of paragraphs C1 - C8, wherein the fastener shank has a threaded portion and an entirety of the threaded portion is free of sealant.

### Conclusion

The disclosure set forth above may encompass multiple distinct examples with independent utility. Although each of these has been disclosed in its preferred form(s), the specific embodiments thereof as disclosed and illustrated herein are not to be considered in a limiting sense, because numerous variations are possible. To the extent that section headings are used within this disclosure, such headings are for organizational purposes only. The subject matter of the disclosure includes all novel and nonobvious combinations and subcombinations of the various elements, features, functions, and/or properties disclosed herein. The following claims particularly point out certain combinations and subcombinations regarded as novel and nonobvious. Other combinations and subcombinations of features, functions, elements, and/or properties may be claimed in applications claiming priority from this or a related application. Such claims, whether broader, narrower, equal, or different in scope to the original claims, also are regarded as included within the subject matter of the present disclosure.

## Claims

1. A gripper (100) for a fastener installation assembly, the gripper (100) comprising:
a body (102), the body (102) comprising a first end and a second end opposite the first end, and the body (102) having a passage (108) extending between the first end and the second end; and
a lip (114) extending from the first end of the body (102), the lip (114) having at least one orifice (110A) in fluid communication with the passage (108);
wherein the lip (114) has a recess (116) configured to engage an unthreaded portion of a fastener; and
wherein the body (102) is configured to deliver sealant to the orifice (110A) via the passage (108) for application to the unthreaded portion of the fastener engaged by the lip (114).

2. The gripper (100) of claim 1, wherein the recess (116) of the lip (114) is configured to receive the unthreaded portion of the fastener.

3. The gripper (100) of claim 2, wherein the recess (116) of the lip (114) is configured to cooperate with a second gripper (100) to grip the fastener when the unthreaded portion of the fastener is received by the recess (116).

4. The gripper (100) of any of claims 1-3, wherein the recess (116) has a rounded shape.

5. The gripper (100) of any of claims 1-4, wherein the body (102) is configured to be operatively coupled to the fastener installation assembly.

6. A sealant applicator (100) comprising:
a body (102) comprising a first end and a second end opposite the first end, wherein the body (102) has an outlet (110A) at the first end and an inlet (112) at the second end, the inlet (112) and outlet (110A) being in fluid communication with each other; and
a pair of arms (120A, 120B) protruding from the first end of the body (102), wherein the pair of arms (120A, 120B) are configured to receive between them an unthreaded portion of a fastener;
wherein the inlet (112) faces in a first direction and the outlet (110A) faces in a second direction away from the first direction.

7. The sealant applicator (100) of claim 6, wherein the pair of arms (120A, 120B) define between them a rounded recess (116) configured to receive the unthreaded portion of the fastener.

8. The sealant applicator (100) of claim 6 or 7, wherein the sealant applicator (100) is a first sealant applicator (100) configured to cooperate with a second sealant applicator (100) to cooperatively grip the unthreaded portion of the fastener.

9. The sealant applicator (100) of any of claims 6-8, further comprising a hook portion extending from the body (102) in the second direction and configured to engage a protrusion of a fastener installation machine to mount the sealant applicator to the fastener installation machine.

10. The sealant applicator (100) of any of claims 6-9, wherein the first end of the body (102) has a channel (124) and the outlet (110A) is disposed in the channel (124).

11. The sealant applicator (100) of any of claims 6-10, wherein the outlet (110A) is a first outlet (110A), the sealant applicator (100) further comprising at least a second outlet (110B) in fluid communication with the inlet (112).

12. A method (700) of applying sealant, the method (700) comprising:
receiving (702) a sealant at an inlet of a first gripper;
receiving (704) an unthreaded portion of a fastener shank at a notched end of the first gripper; and
dispensing (706) the sealant on the unthreaded portion of the fastener shank from an outlet formed in the notched end of the first gripper, the outlet being in fluid communication with the inlet.

13. The method (700) of claim 12, further comprising delivering the sealant from the inlet to the outlet via a hollow interior portion of the first gripper.

14. The method (700) of claim 12 or 13, further comprising releasing (710) the first gripper from a fastener installer machine and receiving a replacement first gripper at the fastener installer machine.

15. The method (700) of any of claims 12-14, further comprising receiving (708) the unthreaded portion of the fastener shank at a notched end of a second gripper, such that the respective notched ends of the first and second grippers cooperatively grip the unthreaded portion of the fastener shank.
